Europäisches Patentamt

European Patent Office

Office européen des brevets

(19)

(11) Veröffentlichungsnummer : **0 086 012**
**B1**

(12) **EUROPÄISCHE PATENTSCHRIFT**

(45) Veröffentlichungstag der Patentschrift :
16.04.86

(21) Anmeldenummer : 83200128.3

(22) Anmeldetag : 26.01.83

(51) Int. Cl.⁴ : **C 22 F   1/00**

(54) Verfahren zur Erzeugung eines reversiblen Zweiweg-Gedächtniseffektes in einem Bauteil aus einer einen Einwegeffekt zeigenden Legierung.

(30) Priorität : 05.02.82 CH 705/82

(43) Veröffentlichungstag der Anmeldung :
17.08.83 Patentblatt 83/33

(45) Bekanntmachung des Hinweises auf die Patenterteilung : 16.04.86 Patentblatt 86/16

(84) Benannte Vertragsstaaten :
AT BE CH DE FR GB LI SE

(56) Entgegenhaltungen :
EP-A- 0 035 601
DE-A- 2 055 755
FR-A- 2 378 101
JOURNAL OF APPLIED PHYSICS, Band 34, Nr. 5, Mai
1963, Seiten 1475-1477, New York, USA, W.J.
BUEHLER et al.: "Effect of low temperature phase
changes on the mechanical properties of alloys near
composition TiNi"
METALLURGICAL   TRANSACTIONS,   Band   7A,
Februar 1976, Seiten 265-272, C. RODRIGUEZ et al.:
"Transitions between stress-induced martensites in
Cu Al Ni alloys"
JOURNAL OF METALS JOM, Band 34, Nr. 12, Dezember 1982, Seiten 14-20, Warrendale, Pennsylvania,
USA, T.W. DUERIG et al.: "A shape-memory alloy for
high-temperature applications"

(73) Patentinhaber : BBC Aktiengesellschaft Brown,
Boveri & Cie.
Haselstrasse
CH-5401 Baden (CH)

(72) Erfinder : Albrecht, Joachim, Dr.
Mitteldorfweg 206
CH-5243 Mülligen (CH)
Erfinder : Duerig, Thomas, Dr.
Lirchweg 49
CH-5415 Nussbaumen (CH)
Erfinder : Schröder, Günther, Dr.
Dolderweg 597
CH-5413 Birmenstorf (CH)

## Beschreibung

Die Erfindung geht aus von einem Verfahren zur Erzeugung eines Zweiweg-Gedächtniseffekts nach der Gattung des Oberbegriffs des Anspruchs 1.

Bei den Gedächtnislegierungen kann man im allgemeinen einen sog. Zweiwegeffekt von einem Einwegeffekt unterscheiden. Während letzterer in der Regel ausgeprägter und bekannter ist (Ni/Ti-Legierungen, β-Messinge) und auch zu zahlreichen Anwendungen geführt hat, ist der Zweiwegeffekt problematischer und schwieriger zu beherrschen. Doch besteht in der Technik ein allgemeines Bedürfnis nach Bauelementen, welche einen quantitativ genügend grossen Zweiwegeffekt zeigen, um ein weiteres interessantes Anwendungsgebiet zu erschliessen. Meist liegt nun jedoch der Punkt der martensitischen Umwandlung der klassischen Zweiwegeffekt-Legierungen in einem ungünstigen Temperaturbereich. Es gibt jedoch eine Anzahl von Gedächtnislegierungen, vorab die dem β-Messingtyp angehörenden klassischen Cu/Al/Ni- und Cu/Al-Legierungen, deren Umwandlungspunkt günstig liegt, die zwar wohl einen deutlichen Einwegaber kaum einen namhaften Zweiwegeffekt zeigen.

Als Stand der Technik können u. a. folgende Dokumente angeführt werden :

R. Haynes, Some Observations on Isothermal Transformations of Eutectoid Aluminium Bronzes Below Their $M_S$ Temperatures, Journal of the Institute of Metals 1954-55, Vol. 83, Seiten 357-358 ; W.A. Rachinger, A « super-elastic » single Crystal calibration bar, Britisch Journal of Applied Physics, Vol. 9, Juni 1958, Seiten 250-252 ; R.P. Jewett, D.J. Mack. Further Investigation of Copper-Aluminium Alloys in the Temperature Range below the $\beta \rightleftharpoons \alpha+\gamma_2$ Eutectoid, Journal of the Institute of Metals 1963-64, Vol. 92, Seiten 59-61 ; K. Otsuka and K. Shimizu, Memory Effect and Thermoelastic Martensite Transformation in Cu-Al-Ni Alloy, Scripta Metallurgia, Vol. 4, 1970 Pergamon Press Inc., Seiten 469-472 ; Kazuhiro Otsuka, Origin of Memory Effect in Cu-Al-Ni Alloy, Japanese Journal of Applied Physics, Vol. 10, No. 5, May 1971, Seiten 571-579.

Es besteht daher ein Bedürfnis nach Bauelementen aus Gedächtnislegierungen des β-Messingtyps, welche bei für gewisse Anwendungen günstig liegender Umwandlungstemperatur einen namhaften Zweiwegeffekt aufweisen.

Der Erfindung liegt die Aufgabe zugrunde, für Bauteile aus einer normalerweise nur einen Einwegeffekt zeigenden Legierung ein Verfahren anzugeben, um in diesen Bauteilen unabhängig vom Betriebszustand einen beträchtlichen reversiblen Zweiweg-Gedächtniseffekt zu induzieren.

Diese Aufgabe wird durch die im kennzeichnenden Teil des Anspruchs 1 angegebenen Merkmale gelöst.

Die Erfindung wird anhand der nachfolgenden, durch Figuren erläuterten Ausführungsbeispiele beschrieben.

Dabei zeigt :

Figur 1 einen einseitig kugelgestrahlten Biegestab aus einer Gedächtnislegierung,

Figur 2 einen rundgehämmerten Zugstab aus einer Gedächtnislegierung,

Figur 3 das Prinzip der inhomogenen Verformung eines kurzen Stabes mit Hilfe von Druckstempeln,

Figur 4 den Verformungs- und Spannungsverlauf in einem gemäss Figur 3 inhomogen verformten kurzen Stab.

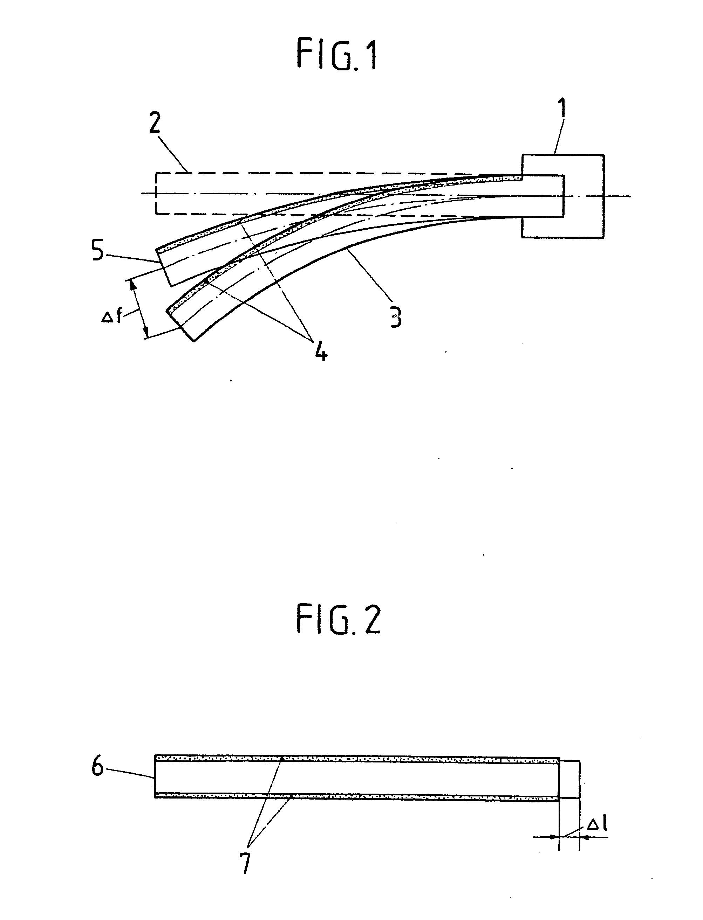

Die Fig. 1 stellt einen Biegestab dar, welcher durch einseitiges Kugelstrahlen inhomogen verformt wurde. 1 ist eine Einspannvorrichtung, 2 ein Biegestab (meist prismatisch) aus einer Gedächtnislegierung vor der Behandlung. 3 zeigt den Biegestab nach dem einseitigen Kugelstrahlen in der dadurch bedingten, durch inhomogene Verformung angenommenen (gebogenen) Gestalt. 4 ist die kugelgestrahlte, unter Druckvorspannungen stehende und verfestigte Oberflächenschicht. 5 zeigt die Form des Biegestabes nach dem Kugelstrahlen und einer Erwärmung auf eine Temperatur von 220 °C. Die beim Erwärmen erlittene Auslenkungsdifferenz Δf (Durchbiegung) ist ein Mass für die Grösse des Zweiweg-Gedächtniseffekts. Nach Abkühlen auf Raumtemperatur kehrt der Stab in die Grundstellung entsprechend 3 zurück. Dieser Zyklus lässt sich beliebig oft wiederholen.

In Fig. 2 ist ein rundgehämmerter Zugstab gezeichnet. 6 stellt diesen Zugstab aus einer Gedächtnislegierung nach dem Rundhämmern dar. 7 deutet dabei die rundgehämmerte Oberflächenschicht an. Bei Erwärmung dehnt sich der Stab in Längsrichtung um den angedeuteten Betrag der Längenänderung Δl, welcher ein Mass für die Grösse des Zweiweg-Gedächtniseffekts ist. Dieser Effekt ist reversibel.

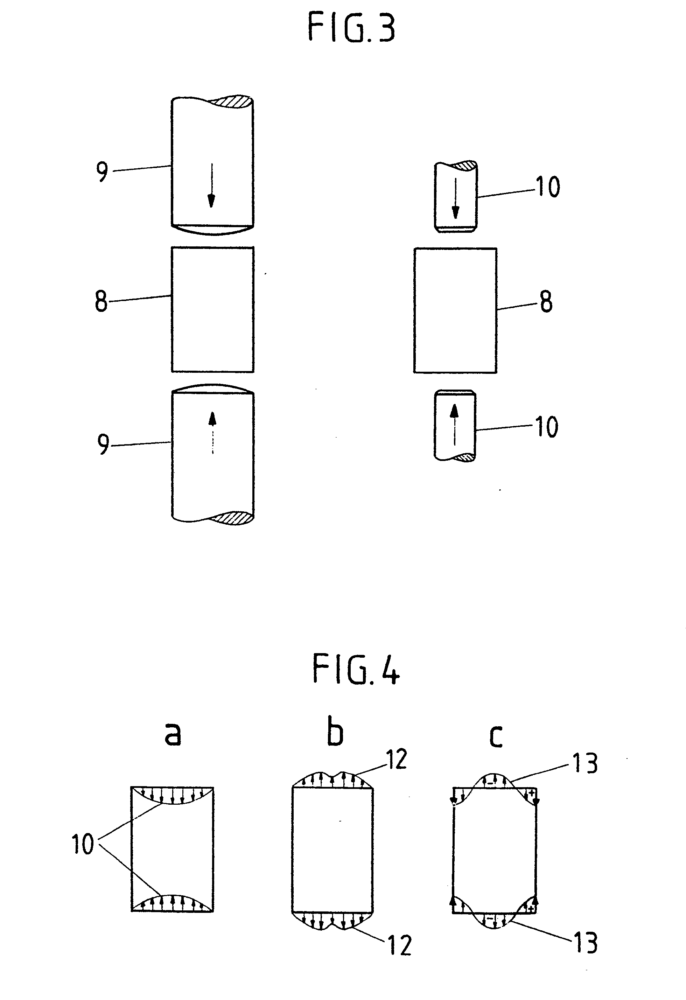

Fig. 3 zeigt in zwei Varianten das Prinzip der inhomogenen Verformung eines kurzen Stabes mit Hilfe von Druckstempeln. 8 ist ein kurzer Stab aus einer Gedächtnislegierung. 9 stellt einen Druckstempel mit gewölbter Stirnfläche dar. 10 dagegen ist ein Druckstempel mit gegenüber 8 reduziertem Querschnitt und ebener Stirnfläche. Die Pfeile deuten die bei der Verformung des Stabes 8 von den Stempeln 9 bzw. 10 auszuführenden Bewegungen an.

In Fig. 4 ist der Verformungs- und Spannungsverlauf in einem entsprechend Fig. 3 inhomogen verformten kurzen Stab dargestellt. Dabei zeigt die Kurve 11 in Fig. 3a den Verlauf der Verformung über den Stabquerschnitt. Während die Randzone praktisch unverformt geblieben ist, tritt die grösste Verformung (im vorliegenden Fall Stauchung) in der Mitte des Stabes auf. Kurve 12 in Fig. 3b zeigt den Verlauf der Bewegung (Dehnung) für den Fall der Einstellung des ungehemmten Einweg-Gedächtniseffekts. In Fig. 3, Kurve 13 ist schliesslich der Verlauf der sich nach dem Einweg-Gedächtniseffekt einstellenden Restspannungen eingezeichnet. Rand- und Kernzone sind gegeneinander verspannt. Die Pfeile deuten jeweils die Verformungs-, Bewegungs- und Spannungsrichtung an.

Ausführungsbeispiel I :

Siehe Fig. 1.

Als Ausgangsmaterial wurde eine Gedächtnislegierung der nachfolgenden Zusammensetzung verwendet :

Al : 13,2 Gew.-%
Ni : 3,2 Gew.-%
Cu : Rest

Aus einem zuvor warmgekneteten Band wurde ein Biegestab 2 mit den Abmessungen 2,5 × 2,5 × 35 (Masse in mm) herausgearbeitet und während 15 min einer Lösungsglühung bei einer Temperatur von 950 °C ausgesetzt und daraufhin in Wasser abgeschreckt. Dann folgte eine 2 min dauernde Kugelstrahlbehandlung auf nur einer der Längsseiten des Stabes. Strahlmedium : Stahlkugeln, Strahlintensität mittel. Nach dem Kugelstrahlen hatte der Biegestab die gemäss 3 gekrümmte Form, wobei die kugelgestrahlte Oberflächenschicht 4 unter Druckspannung stand. Durch diese Behandlung wurde der Stab befähigt, einen Zweiweg-Gedächtniseffekt zu zeigen. Beim Erwärmen auf 220 °C nahm der Stab die Form gemäss 5 an. Die Bewegungsrichtung war also derart, dass der Stab das Bestreben hatte, die durch das Kugelstrahlen verursachte Verformung rückgängig zu machen (sich zu « strecken »). Die Auslenkungsdifferenz Δf (Durchbiegung) betrug im vorliegenden Fall 2,2 mm, was einer Dehnung (Zweiweg-Gedächtniseffekt) von ca. 0,6 % entsprach. Wäre man von einem Stab mit ursprünglich auf der einer Kugelstrahlbehandlung zu unterziehenden Seite konkav gekrümmten Oberfläche ausgegangen, dann hätte sich dieser Stab zunächst durch das Kugelstrahlen gestreckt (Vergrösserung des Krümmungsradius, gegebenenfalls bis zur ebenen Form), um sich nach Erwärmung erneut konkav zu krümmen.

Ausführungsbeispiel II :

Siehe Fig. 2.

Aus dem gleichen Werkstoff wie in Beispiel I angegeben wurde ein Stab mit kreisrundem Querschnitt angefertigt.

Der Stab hatte einen Durchmesser von 9 mm und eine Länge von 180 mm. Er wurde während 15 min bei einer Temperatur von 950 °C lösungsgeglüht und anschliessend in Wasser abgeschreckt. Dann wurde der Stab auf 300 °C erwärmt und bei dieser Temperatur in einer Rundhämmermaschine auf einen Durchmesser von 8,5 mm heruntergehämmert, entsprechend einer Reduktion von ca. 5 %. Die Stahlbacken der Rundhämmermaschine waren zu diesem Zweck auf 350 °C vorgewärmt worden. 6 ist dieser Zugstab und 7 die rundgehämmerte Oberflächenschicht. Bei Erwärmung von Raumtemperatur auf 250 °C konnte eine Längenänderung Δl entsprechend einer Dehnung von ca. 0,2 % beobachtet werden. Diese Längenänderung war reversibel, d. h. sie konnte beliebig oft beim Durchlaufen dieses Temperaturzyklus wiederholt werden.

Die Erfindung ist nicht auf die Ausführungsbeispiele beschränkt. Gemäss Figuren 3 und 4 können ähnliche Effekte mit kurzen Zug/Druck-Stäben erreicht werden. Das gleiche gilt für auf Schub beanspruchte Bauteile (z. B. Torsionsstab, Schraubenfeder etc.). Wesentlich ist das Prinzip der inhomogenen Verformung, d. h. das Bauteil muss über den gesamten Querschnitt betrachtet, Zonen verschieden grosser Verformung aufweisen, damit der stark verformte Anteil des Querschnitts als Verspannungselement (Behinderung) für den Einwegeffekt wirkt.

Die für das Verfahren geeigneten Werkstoffe sind alle Gedächtnislegierungen, welche von Natur aus lediglich einen Einwegeffekt zeigen oder deren Zweiwegeffekt so klein ist, dass er keine praktische Bedeutung hat. Dazu gehören vor allem die Cu/Al/Ni-, Cu/Al-, Cu/Zn/Al-, Ti/V-, Ti/Ni- und Ni/Ti/Cu-Legierungen.

Durch das neue Verfahren wird es möglich, in Bauteilen aus einer an sich lediglich den Einwegeffekt aufweisenden Gedächtnislegierung, vorab des β-Messingtyps einen namhaften Zweiwegeffekt auszulösen und damit diesen bisher nur beschränkt einsetzbaren Werkstoffen ein neues weiteres Verwendungsgebiet zu erschliessen.

**Patentansprüche**

1. Verfahren zur Erzeugung eines reversiblen Zweiweg-Gedächtniseffektes in einem Bauteil bestehend aus einer unter normalen Bedingungen lediglich einen Einwegeffekt zeigenden Gedächtnislegierung des Cu/Al/Ni-, Cu/Al-, Cu/Zn/Al-, Ti/V-, Ti/Nb-, Ni/Ti- oder Ni/Ti/Cu-Typs, wobei das Bauteil einer Lösungsglühung im Temperaturgebiet des β-Mischkristalls mit anschliessendem Abschrecken in Wasser sowie einer Verformung unterworfen wird, dadurch gekennzeichnet, dass die Verformung inhomogen durchgeführt wird, dergestalt, dass ein Teil des Querschnitts des Bauteils so stark deformiert wird, dass dieser Teil dank der aufgedrückten Verspannung als Gegenfeder wirkt und im übrigen, schwächer oder nicht deformierten Teil des Querschnitts den Einwegeffekt weitgehend unterdrückt.

2. Verfahren nach Anspruch 1, dadurch gekennzeichnet, dass ein Teil der Oberfläche des Bauteils durch Kugelstrahlen inhomogen verformt wird.

3. Verfahren nach Anspruch 1, dadurch gekennzeichnet, dass das Bauteil ein runder Stab ist und dass mindestens ein Teil seiner Oberfläche durch Rundhämmern inhomogen verformt wird.

4. Verfahren nach Anspruch 1, dadurch gekennzeichnet, dass das Bauteil ein kurzer runder oder prismatischer Stab ist und dass dessen Querschnitt durch Stauchen inhomogen verformt wird, dergestalt, dass die Kernzone eine stärkere Verformung erleidet als die Randzone.

## Claims

1. Process for producing a reversible two-way memory effect in a component consisting of a memory alloy, which under normal conditions shows only a one-way effect, of the Cu/Al/Ni, Cu/Al, Cu/Zn/Al, Ti/V, Ti/Nb, Ni/Ti or Ni/Ti/Cu type, the component being subjected to solution annealing in the temperature region of the β-mixed crystal with subsequent quenching in water and to a deformation, characterised in that the deformation is carried out inhomogeneously in such a way that a part of the cross-section of the component is deformed to such an extent that this part acts as a counter-spring due to the impressed distortion and largely suppresses the one-way effect in the remaining part of the cross-section, which is less deformed or not at all.

2. Process according to Claim 1, characterised in that a part of the surface of the component is inhomogeneously deformed by means of shotpeening.

3. Process according to Claim 1, characterised in that the component is a round bar and that at least a part of its surface is inhomogeneously deformed by swaging.

4. Process according to Claim 1, characterised in that the component is a short round or prismatic bar and that its cross-section is inhomogeneously deformed by upsetting in such a way that the core zone undergoes a more extensive deformation than the edge zone.

## Revendications

1. Procédé pour obtenir un effet de mémoire réversible à deux voies dans une pièce constituée d'un alliage à mémoire ne manifestant, dans des conditions normales, qu'un effet à une voie, du type Cu/Al/Ni, Cu/Al, Cu/Zn/Al, Ti/V, Ti/Nb, Ni/Ti ou Ni/Ti/Cu, dans lequel la pièce est soumise à un recuit de mise en solution dans le domaine de température du cristal mixte β puis à une trempe à l'eau et à une déformation, caractérisé en ce que la déformation est appliquée de façon hétérogène de telle sorte qu'une partie de la section de la pièce soit déformée à un point tel que, grâce à la déformation appliquée, cette pièce agisse comme un ressort antagoniste et contrarie fortement l'effet à une voie dans la partie moins déformée ou non déformée de la section.

2. Procédé suivant la revendication 1, caractérisé en ce qu'une partie de la surface de la pièce est déformée de façon hétérogène par grenaillage.

3. Procédé suivant la revendication 1, caractérisé en ce que la pièce est un barreau rond et en ce qu'au moins une partie de sa surface est déformée de façon hétérogène par matriçage.

4. Procédé suivant la revendication 1, caractérisé en ce que la pièce est un court barreau rond ou prismatique et en ce que sa section est déformée de façon hétérogène par refoulement, de telle sorte que la zone centrale subisse une déformation plus marquée que la zone périphérique.

# FIG.1

# FIG.2

# FIG.3

# FIG.4

a          b          c